# NEW EUROPEAN PATENT SPECIFICATION

(11) **EP 1 245 846 B2**
(45) Date of publication and mention of the opposition decision: **22.10.2014**
(45) Mention of the grant of the patent: 09.05.2007
(21) Application number: 02007076.9
(22) Date of filing: 27.03.2002
(51) Int. Cl.: F16C 33/46

(54) **Method of manufacturing a tapered roller bearing**
Verfahren zur Fertigung eines Kegelrollenlagers
Procédé de fabrication d' un palier à rouleaux côniques

(30) Priority: 28.03.2001 JP 2001093028
(43) Date of publication of application: 02.10.2002
(73) Proprietor: NTN Corporation, Osaka (JP)
(72) Inventor: Yasuhiro, Shimizu, Oaza Higashikata, Kuwana-shi, Mie (JP); Ishikawa, Shiro, Oaza Higashikata, Kuwana-shi, Mie (JP); Okamoto, Yuji, Oaza Higashikata, Kuwana-shi, Mie (JP)
(74) Representative: Grünecker, Kinkeldey, Stockmair & Schwanhäusser

(56) References cited:
- DE-A- 10 021 089
- DE-A- 19 925 700
- DE-A1- 3 002 688
- DE-A1- 4 442 269
- DE-A1- 19 734 080
- DE-U- 20 005 228
- FR-A- 527 086
- GB-A- 1 398 792
- JP-A- S5 779 327
- US-A- 1 645 866
- US-A- 3 582 165
- US-A- 3 940 193
- US-A- 4 700 443
- PATENT ABSTRACTS OF JAPAN vol. 1999, no. 05, 31 May 1999 (1999-05-31) -& JP 11 051060 A (NTN CORP), 23 February 1999 (1999-02-23)
- PATENT ABSTRACTS OF JAPAN vol. 1999, no. 01, 29 January 1999 (1999-01-29) -& JP 10 267038 A (NIPPON SEIKO KK), 6 October 1998 (1998-10-06)
- 'Kegelrollenlager' SKF HAUPTKATALOG 1994, pages 512 - 519
- G. MATTHÉE: 'Lexikon der Fertigungstechnik und Arbeitsmaschinen', 1968, DEUTSCHE VERLAGS-ANSTALT, STUTTGART page 157
- 'NTN Bearing Technology for Railroad Applications' NTN

## Description

### BACKGROUND OF THE INVENTION

This invention relates to a method for manufacturing a tapered roller bearing.

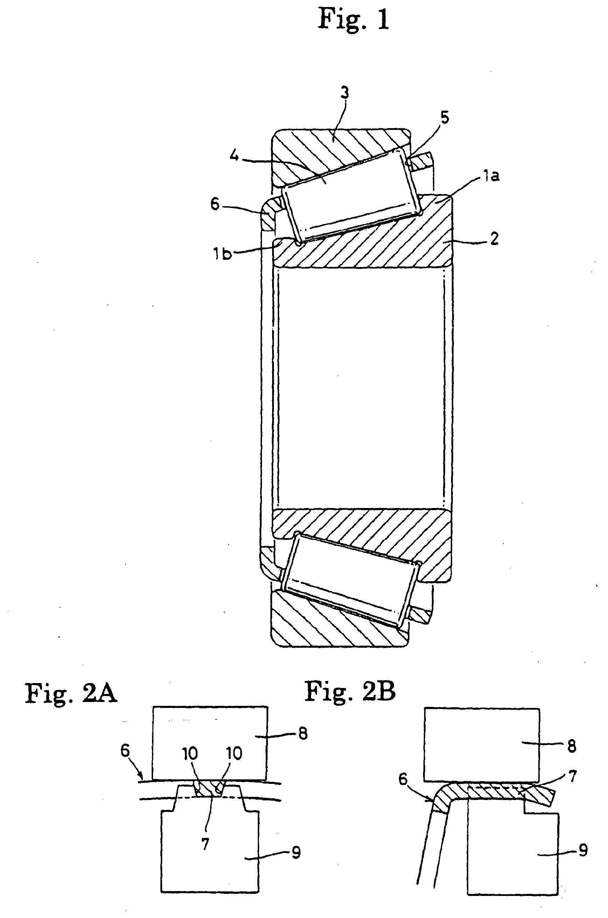

A tapered roller bearing comprises, as shown in Fig. 1, an inner ring 2 having a large flange 1a and a small flange 1b on both sides of a conical raceway, an outer ring 3 having a conical raceway, a plurality of tapered rollers 4 rollably mounted between the raceways of the inner and outer rings 2 and 3, and a retainer 6 for retaining the tapered rollers 4 in pockets 5 at equal circumferential intervals.

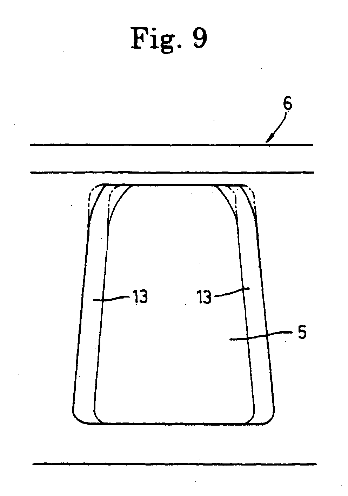

The width of each pocket 5 is set narrower than the diameter of the tapered rollers 4 so that the rollers will not come off from the outer-diameter side of the retainer. As shown in Fig. 9 in which the retainer 6 is seen from its inner-diameter side, circumferential end faces 13 on both sides of each pocket 5, which are in contact with the conical surface of the tapered roller 4, are tapered so as to diverge axially of the tapered roller 4 toward its large-diameter side.

Such retainers 6 formed by pressing steel plates are ordinarily used. That is to say, first, a steel plate is subjected to drawing and punching to form a blank of a conical, ring-shaped retainer 6 having circumferentially arranged pockets 5. Then, as shown in Figs. 2A and 2B, pillars 7 circumferentially separating the pockets 5 are formed by bottoming one by one into an inward trapezoidal shape by means of a punch 8 and a die 9 having a trapezoidal section.

As shown in Fig. 1, since the large flange 1a and the small flange 1b are provided on both sides of the raceway of the inner ring 2, if the retainer 6 is formed merely by bottoming, it is impossible to insert the tapered rollers 4 into the pockets 5 from the inner-diameter side of the retainer.

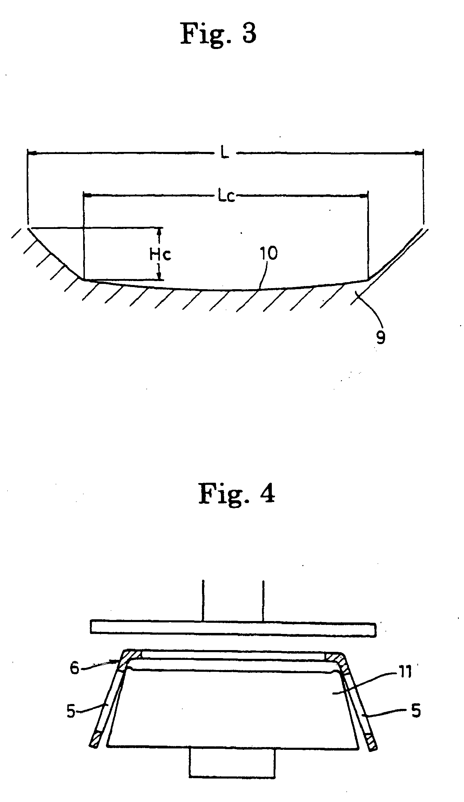

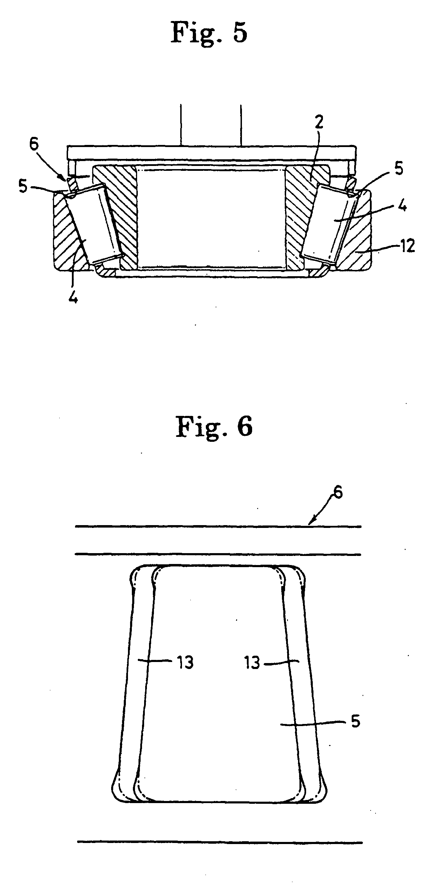

Thus, as shown in Fig. 4, the diameter of the small-diameter side of the conical, ring-shaped retainer 6 is increased by means of an expanding punch 11. Thereafter, as shown in Fig. 5, a tapered roller bearing in which the tapered rollers 4 are inserted into the respective pockets 5 from the small-diameter side of the retainer 6, of which the diameter has been increased, to integrate them with the inner ring 2 is set in a caulking mold 12 and the retainer 6 is caulked so that the tapered rollers 4 will not come off.

With such a conventional tapered roller, when the diameter of the retainer on the small-diameter side is increased or expanded, the circumferential end faces may protrude inwardly at its recesses on the small-diameter side of each pocket. As shown in Fig. 9, even after caulking, the protruding portions may remain, so that the recesses on the small-diameter side of the pockets 5 may shift inwardly from the reference trapezoid shown by chain line in the figure. Such deformation of the recesses of the pockets tends to occur with retainers having a large plate thickness or large pillar width.

If such deformation of the recesses of the pockets occurs, if the tapered roller bearing is used at a location where vibration or the dn value is large, the tapered rollers will locally contact the recesses of the retainer during rotation of the bearing. The retainer is thus likely to get worn. Wear powder of the retainer will also cause premature deterioration of lubricating oil for the bearing. The dn value is the product of the pitch circle diameter d (mm) of the rolling elements and revolutions n (rpm) of the bearing. If inward shift of the recesses is large, smearing may develop on the tapered rollers.

By adopting an arrangement in which the small flange of the inner ring is a separate member, it is possible to omit bottom expanding and caulking steps, so that deformation of the recesses of the pockets will not occur. But it is not only necessary to separately manufacture the small flange, but precision is required to machine a portion where the small flange is fitted, and also the number of assembling steps increases, which increases the manufacturing cost of the bearing.

Further, a tapered roller bearing and a method for its production is known from prior art US 4,700,443. In particular, this prior art relates to a method for assembling an inner race for a roller bearing and an annular cage whose openings contain rolling elements. The roller bearing known from this prior art also comprises flanges on both sides of conical raceway. The pocket of the device known from this prior art, however, does not have a taper so as to diverge toward the outer diameter side.

An object of this invention is to provide a method for manufacturing tapered roller bearing in which the retainer will not wear during use even if bottom-expanding and caulking steps of the retainer are carried out.

### SUMMARY OF THE INVENTION

The above object is achieved by a method for manufacturing tapered roller bearing as defined in claim 1.

That is to say, since the circumferential end faces on both sides of the pockets of the retainer are crowned, i.e have a shape as defined in claim 1, even if deformation occurs in the recesses of the pockets during bottom-expanding and caulking steps, the tapered rollers are brought into contact with the crown portions of the circumferential end faces on both sides to prevent local contact with the recesses, thereby preventing wear of the retainer.

Since the axial length of the crown portions, i.e. the protruding portion, is 40% or over of the overall length of the circumferential end faces, the circumferential end faces can stably guide the tapered rollers, so that skew of the tapered rollers can be minimized while the bearing is rotating.

Other features and objects of the present invention will become apparent from the following description made with reference to the accompanying drawings, in which:

### BRIEF DESCRIPTION OF THE DRAWINGS

Fig. 1 is a vertical sectional view of a tapered roller bearing;
Fig. 2A is a vertical sectional view showing tools for forming pillars of the retainer of Fig. 1 by pressing;
Fig. 2B is a sectional side view of Fig. 2A;
Fig. 3 is a sectional view showing a longitudinal profile of the side wall of the die shown in Fig. 2A;
Fig. 4 is a vertical sectional view showing the bottom-expanding step of the retainer shown in Fig. 1;
Fig. 5 is a vertical sectional view showing the caulking step of the retainer shown in Fig. 1;
Fig. 6 is a enlarged plan view of the pocket of the retainer of Fig. 1;
Fig. 7 is a graph showing measuring results of axial profiles of circumferential end faces on both sides of the pocket of Fig. 6 before bottom-expanding and caulking steps;
Fig. 8 is a similar graph to Fig. 7 but after bottom-expanding and caulking steps; and
Fig. 9 is an enlarged plan view showing a pocket of the retainer of a conventional tapered roller bearing.

### DETAILED DESCRIPTION OF THE PREFERRED EMBODIMENT

With reference to the drawings, an embodiment of this invention will be described. As shown in Fig. 1, this tapered roller bearing basically comprises an inner ring 2 having a conical raceway and formed with a large flange 1a and a small flange 1b on both sides of the conical raceway, an outer ring 3 having a conical raceway, a plurality of tapered rollers 4 rollably mounted between the raceways of the inner ring 2 and the outer ring 3, and a retainer 6 formed with pockets 5 for retaining the tapered rollers 4 in the pockets 5 at circumferential intervals.

The retainer 6 is formed by pressing a steel plate. First, the steel plate is subjected to drawing and punching to form a blank of a conical, ring-shaped retainer 6 formed with circumferentially arranged pockets 5. Then, as shown in Figs. 2A and 2B, pillars 7 circumferentially separating the pockets 5 from one another are formed by bottoming one by one into an inwardly trapezoidal shape by means of a punch 8 and a die 9 having a trapezoidal section. The term "bottoming" means applying a pressure at the stroke end during pressing to achieve a desired shape.

As shown in Fig. 3, both side walls 10 defining the trapezoidal section of the die 9 have a middle-low shape along a longitudinal direction in which the pillars 7 are formed by bottoming. The length Lc of the middle low portion is 40% or more of the overall length L of the side walls 10. In view of deformation of the recesses of the pockets during the later bottom-expanding and caulking steps, its height Hc is preferably 0.05 mm or over.

After forming by bottoming, the retainer 6 has its bottom or small-diameter side expanded by means of an expanding punch 11 as shown in Fig. 4. Further, as shown in Fig. 5, the tapered rollers 4 are inserted into the respective pockets 5 from the small-diameter side, which has been expanded, and then the retainer 6 is caulked by a caulking mold 12 so that the tapered rollers 4 will not come off.

Fig. 6 shows an enlarged view of each pocket 5 of the retainer 6 after the bottom-expanding and caulking steps. Since the circumferential end faces 13 on both sides of the pocket 5, i.e. both end faces of the pillars 7 are formed into a crown shape in the axial direction by transferring the middle-low shape of the side walls 10 of the die 9, even if deformation occurs in recesses on the small-diameter side of the pocket 5 during the bottom-expanding and caulking steps, the recesses will protrude outside of the reference trapezoid shown by chain line in Fig. 6.

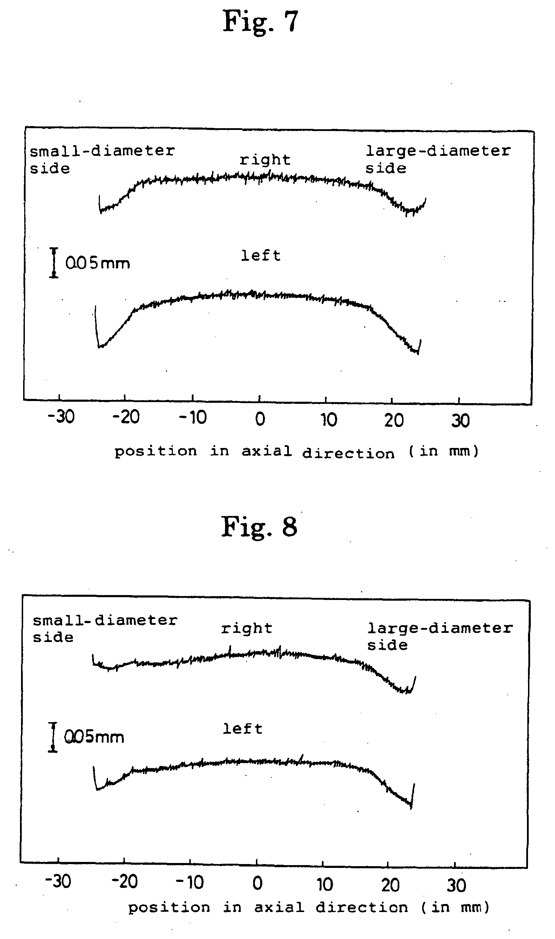

Figs. 7 and 8 show the results of measurement in which the axial profiles of the circumferential end faces 13 on both sides of the pocket 5 before and after the bottom-expanding and caulking steps were determined by a shape measuring machine, respectively.

As shown in Fig. 7, before the bottom-expanding and caulking steps, the circumferential end faces 13 on both sides have a crown shape by transferring the middle-low shape of the die 9. After the bottom-expanding and caulking steps, as shown in Fig. 8, the shape of the circumferential end faces 13 is such that the protrusions in the recesses on the small-diameter side of the pocket 5 remain and the amount of concaveness of the recesses of the pocket 5 is smaller than before the bottom-expanding and caulking steps shown in Fig. 7. But the length of the crown portion of each circumferential end face 13 remains at 40% or over of its overall axial length.

Thus, with this tapered roller bearing, the tapered rollers 4 held in the respective pockets 5 of the retainer 6 stably contact the crown portions of the circumferential end faces 13 on both sides in a wide range, so that little wear will occur due to local contact with the recesses of the pockets 5.

Thus, with the tapered roller bearing, the circumferential end faces on both sides of the pockets of the retainer have a crown shape, so that even if deformation occurs in the recesses of the pockets during the bottom-expanding and caulking steps, the tapered rollers contact the circumferential end faces on both sides at their crown portions. Thus, the tapered rollers will hardly contact the recesses of the pockets locally. This prevents wear of the retainer and deterioration of lubricating oil due to wear powder.

## Claims

1. A method for manufacturing a tapered roller bearing comprising:
an inner ring (2) having a conical raceway and formed with flanges (1a, 1b) on both sides of said conical raceway,
an outer ring (3) having a conical raceway,
a plurality of tapered rollers (4) rollably mounted between the raceways of said inner and outer rings (2, 3) and having a conical surface,
a retainer (6) formed with a plurality of pockets (5) for retaining said tapered rollers (4) in said pocket (5) at predetermined circumferential intervals,
pillars (7) circumferentially separating said pockets (5) from one another,
wherein each corner portion of said pocket (5) has a recess protruding outward of a reference trapezoid containing the circumferential end faces (13) on both sides of said pocket (5),
said retainer (6) is formed by pressing a metallic plate such that circumferential end faces (13) on both sides of said respective pockets (5) are tapered so as to diverge axially from the small-diameter side toward the large-diameter side of said tapered rollers (4),
each end face of said pillar (7) has a protruding shape with a protruding portion having a length (Lc) which is 40 % or more of the overall length (L) of said end face of the pillar (7),
whereby said protruding portion contacts the conical surface of said tapered roller (4)
wherein pillars (7) circumferentially separating said respective pockets (5) of said retainer (6) from one another are formed by bottoming by means of a die and a mold,
wherein end faces on both sides of the pillars (7), i.e. side walls of said die (9) used for bottoming the circumferential end faces (13) on both sides of said pocket (5) are formed into a middle-low shape along their longitudinal direction, and
wherein the middle-low shape of the side walls (10) of said die (9) is transferred to the end faces on both sides of said pillars (7), whereby the circumferential end faces (13) on both sides of said respective pockets (5) are formed into a crown shape in the axial direction.

## Patentansprüche

1. Verfahren zur Herstellung eines Kegelrollenlagers, mit:
einem inneren Ring (2) mit einer konischen Laufbahn und angeformten Flanschen (1a, 1b) an beiden Seiten der konischen Laufbahn,
einem äußeren Ring (3) mit einer konischen Laufbahn,
einer Vielzahl kegeliger Rollen (4), die zwischen den Laufbahnen des inneren Rings und äußeren Rings (2, 3) abwälzbar montiert sind und jeweils eine konische Oberfläche haben,
einem mit einer Vielzahl Taschen (5) ausgebildeten Käfig (6) zum Festhalten der kegeligen Rollen (4) mit vorbestimmten Intervallen in Umfangsrichtung in den Taschen (5),
die Taschen (5) voneinander in Umfangsrichtung separierenden Stegen (7),
worin jeder Eckenbereich der Tasche (5) eine Vertiefung hat, die gegenüber einem Referenztrapez nach außen vorspringt, welches die umfänglichen Endflächen (13) an beiden Seiten der Tasche (5) enthält, und
der Käfig (6) durch derartiges Pressen einer metallischen Platte geformt wird, dass umfängliche Endflächen (13) an beiden Seiten der respektiven Taschen (5) konisch zulaufend sind, so dass sie von der kleindurchmessrigen Seite zu der großdurchmessrigen Seite der kegeligen Rollen (4) axial divergieren,
jede Endfläche des Stegs (7) eine vorstehende Gestalt mit einem vorstehenden Bereich mit einer Länge (Lc) hat, welche 40 % oder mehr der Gesamtlänge (L) der Endfläche des Stegs (7) ist, wodurch der vorstehende Bereich die kegelige Oberfläche der kegeligen Rolle (4) kontaktiert,
wobei die jeweiligen Taschen (5) des Käfigs (6) voneinander in Umfangsrichtung separierende Stege (7) durch eine Bodenbildung (Bottoming) mittels einer Form und eines Doms umgeformt werden,
wobei Endflächen an beiden Seiten der Stege (7), d.h. Seitenwänden der zur Bodenverformung der umfänglichen Endflächen (13) an beiden Seiten der Tasche (5) verwendeten Form (9) jeweils entlang ihrer Längsrichtung in eine mittel-niedrige Gestalt geformt werden, und
wobei die mittel-niedrige Gestalt der Seitenwände (10) der Form (9) in die Endflächen an beiden Seiten der Stege (7) transferiert wird, wodurch die umfänglichen Endflächen (13) an beiden Seiten der jeweiligen Taschen (5) in axialer Richtung zu einer Kronengestalt geformt werden.

## Revendications

1. Procédé pour fabriquer un palier à rouleaux coniques comprenant :
une bague interne (2) ayant un chemin de roulement conique et formé avec des rebords (1a, 1b) sur les deux côtés dudit chemin de roulement conique,
une bague externe (3) ayant un chemin de roulement conique,
une pluralité de rouleaux coniques (4) montée de manière roulante entre les chemins de roulement desdites bagues interne et externe (2, 3) et ayant une surface conique,
un dispositif de retenue (6) formé avec une pluralité de poches (5) pour retenir lesdits rouleaux coniques (4) dans ladite poche (5) à des intervalles circonférentiels prédéterminés,
des piliers (7) séparant de manière circonférentielle lesdites poches (5) les unes des autres,
dans lequel chaque partie de coin de ladite poche (5) a un évidement faisant saillie vers l'extérieur d'un trapèze de référence contenant les faces d'extrémité circonférentielle (13) des deux côtés de ladite poche (5),
ledit dispositif de retenue (6) est formé en pressant une plaque métallique de sorte que les faces d'extrémité circonférentielle (13) des deux côtés desdites poches (5) respectives sont rétrécies afin de diverger de manière axiale du côté du petit diamètre vers le côté de grand diamètre desdits rouleaux coniques (4),
chaque face d'extrémité dudit pilier (7) a une forme en saillie avec une partie en saillie ayant une longueur (Lc) qui est 40% ou plus de la longueur globale (L) de ladite face d'extrémité dudit pilier (7), moyennant quoi ladite partie en saillie est en contact avec la surface conique dudit rouleau conique (4),
dans lequel les piliers (7) séparant de manière circonférentielle lesdites poches (5) respectives dudit dispositif de retenue (6) les unes des autres, sont formés en frappant à fond de matrice au moyen d'une matrice et d'un moule,
dans lequel les faces d'extrémité des deux côtés des piliers (7), c'est-à-dire les parois latérales de ladite matrice (9) utilisée pour frapper à fond de matrice les faces d'extrémité circonférentielle (13) sur les deux côtés de ladite poche (5) sont formées selon une forme moyennement basse le long de leur direction longitudinale, et
dans lequel la forme moyennement basse des parois latérales (10) de ladite matrice (9) est transférée vers les faces d'extrémité des deux côtés desdits piliers (7), moyennant quoi les faces d'extrémité circonférentielle (13) des deux côtés desdites poches (5) respectives sont formées selon une forme de couronne dans la direction axiale.
